# EUROPÄISCHE PATENTSCHRIFT

(11) **EP 1 009 648 B1**
(45) Veröffentlichungstag und Bekanntmachung des Hinweises auf die Patenterteilung: **24.09.2003**
(21) Anmeldenummer: 99922132.8
(22) Anmeldetag: 27.04.1999
(51) Int. Cl.: B60S 1/38, B60S 1/52

(54) **WISCHARM FÜR EINE ANLAGE ZUM REINIGEN EINER SCHEIBE**
WIPER ARM FOR A WINDOW CLEANING SYSTEM
BRAS DE MONTURE D'ESSUIE-GLACE POUR UN SYSTEME SERVANT A NETTOYER UNE VITRE

(30) Priorität: 03.07.1998 DE 19829759
(43) Veröffentlichungstag der Anmeldung: 21.06.2000
(73) Patentinhaber: Valeo Wischersysteme GmbH, 74321 Bietigheim-Bissingen (DE)
(72) Erfinder: FINK, Andreas, D-71723 Grossbottwar (DE); GROSSMANN, Michael, D-74343 Grosssachsenheim (DE)
(74) Vertreter: Dreiss, Fuhlendorf, Steimle & Becker
(86) Internationale Anmeldenummer: EP9902823
(87) Internationale Veröffentlichungsnummer: WO00001564

(56) Entgegenhaltungen:
- EP-A- 0 791 514
- DE-A- 3 329 382
- DE-A- 19 702 701
- DE-A- 19 732 521
- DE-A- 19 745 460

## Beschreibung

Die Erfindung bezieht sich auf einen Wischarm für eine Anlage zum Reinigen einer Scheibe an einem Fahrzeug mit den Merkmalen des Oberbegriffs des Anspruchs 1.

Es ist bereits bekannt, an einem Wischarm anzulenkende Wischblätter mit verschiedenartigen Verkleidungen oder Spoilerelementen auszustatten. Ebenso ist bekannt, verschiedenartige Verkleidungen oder Spoilerelemente am Wischarm vorzusehen. Ein Wischarm, von dem die Erfindung ausgeht und der die Merkmale des Oberbegriffs des Anspruchs 1 aufweist, ist aus der EP 0 538 093 A1 bekannt. Dieser Wischarm ist konventionell aufgebaut, d.h. ein Wischarmteil, das von einem aus Blech gefertigten Gelenkteil und einer daran befestigten Wischstange gebildet ist, ist schwenkbar an einem Befestigungsteil angelenkt. Mit dem zu einem Haken umgebogenen freien Ende des Wischarmteiles ist in üblicher Weise über ein Verbindungsstück ein konventionelles Wischblatt angelenkt. Das Wischblatt wird von einem als Bügelkonstruktion ausgebildeten Wischblattgestell und einer daran gehaltenen, elastischen Wischleiste gebildet. Eine insgesamt einstückig ausgebildete Verkleidung mit einer im wesentlichen zu der zu reinigenden Scheibe hin offenen U-artigen Querschnittsform ist von oben her auf den Wischarm aufgesteckt und mittels Rastverbindungen an diesem gehalten. Diese formstabile Verkleidung erstreckt sich in Längsrichtung über den gesamten Wischarm und über das mit dem Wischarm verbundene Wischblatt. Der Wischarm wird also, ausgenommen die auf die Scheibe weisende untere Seite, vollkommen von der Verkleidung umgeben. Im Bereich des Wischblattes reichen die gegenüberliegenden Längsseiten der Verkleidung über einen großen Teil der Höhe der Bügelkonstruktion des Wischblattgestells herab, wobei ihre Unterkanten in einem Abstand über der Oberseite der Wischleiste enden. Zwischen der Oberseite der Wischleiste und den Unterkanten der Verkleidung bleibt also ein Freiraum von einigen Millimetern Höhe bestehen. Nachteilig an diesem Wischarm ist, daß die insgesamt einstückig und formstabil ausgeführte Verkleidung ein von Zeit zu Zeit erforderliches Hochklappen des Wischarmteiles von der Scheibe nicht zuläßt sowie den Austausch des mit dem Wischarm verbundenen Wischblattes stark behindert. Das hat zur Folge, daß vor jedem Hochklappen des Wischarmteiles von der Scheibe und vor jedem Wischblattwechsel die Verkleidung von dem Wischarm entfernt werden muß und nach dem Wischblattwechsel bzw. nach dem Herunterklappen des Wischarmteiles auf die Scheibe wieder montiert werden muß. Die Verrastungsteile der Verkleidung sind dabei schwer zugänglich, so daß die Demontage der Verkleidung schwierig ist. Außerdem besteht die Gefahr, daß Verrastungselemente von der Verkleidung abbrechen und die gesamte Verkleidung somit unbrauchbar wird. Weil die Unterkanten der Verkleidung im Bereich des Wischblattes in einem Abstand oberhalb der Oberseite der Wischleiste enden, entsteht eine vom Fahrtwind durchströmbare Öffnung, die von den unteren Teilen der Bügelkonstruktion des Wischblattgestells durchgriffen werden. Dieses wirkt sich nachteilig auf das Hochgeschwindigkeitsverhalten im Hinblick auf die Aerodynamik oder Aeroakustik aus.

Aufgabe der Erfindung ist es, einen Wischarm der eingangs beschriebenen Art dahingehend zu verbessern, daß eine einfache, problemlose Handhabung für das Hochklappen des Wischarmteiles von der Scheibe oder für den Wischblattwechsel gewährleistet ist.

Erfindungsgemäß wird die Aufgabe durch einen Wischarm mit den Merkmalen des Anspruchs 1 gelöst. Dadurch, daß die als separates Bauteil gefertigte Verkleidung im Bereich ihres, dem Befestigungsteil zugewandten Endes, um eine quer zu dem Wischarmteil verlaufende Achse relativ zu dem Wischarmteil bzw. zu dem Wischarm verschwenkbar mit dem Wischarmteil verbunden ist, ist die gewünschte, vereinfachte Handhabung gewährleistet. Aufgrund dieser Ausbildung kann, beispielsweise für eine manuelle Reinigung der Fahrzeugscheibe, das an dem Befestigungsteil angelenkte Wischarmteil, an dessen freiem Ende das Wischblatt angelenkt ist, in der bei konventionellen Wischarmen bekannten einfachen Art von der Scheibe hochgeklappt werden. Für die Durchführung eines Wischblattwechsels kann die Verkleidung ebenfalls mit dem Wischarm verbunden bleiben, sie braucht lediglich aus ihrer geschlossenen Stellung um die quer zu dem Wischarmteil verlaufende Achse nach oben in eine geöffnete Stellung verschwenkt werden. Damit ist der Anlenkbereich des Wischblattes an dem Wischarmteil freigegeben, und der Wischblattwechsel kann in der gewohnt einfachen Weise durchgeführt werden. Nach erfolgtem Wischblattwechsel wird die Verkleidung wieder in ihre geschlossene Stellung verschwenkt. Das Verschwenken der Verkleidung aus der geschlossenen Stellung in die geöffnete Stellung kann dabei in jeder der möglichen Stellungen des Wischarmteiles zu dem Befestigungsteil des Wischarmes erfolgen.

Vorteilhafte Ausgestaltungen der Erfindung ergeben sich aus den Unteransprüchen. Eine vorteilhafte Ausgestaltung der Erfindung nach Anspruch 2, wonach die Verkleidung über zwei Drehzapfen, die jeweils in eine Lagerbohrung oder eine Lagervertiefung eingreifen, mit dem Wischarmteil verbunden sind, ermöglicht eine einfache und kostengünstige Herstellung eines mit einer erfindungsgemäßen Verkleidung ausgestatteten Wischarmes. Dabei können die Drehzapfen an der Verkleidung vorgesehen sein und von zwei gegenüberliegenden Seitenwänden der Verkleidung nach einwärts abstehen. In diesem Fall sind an den gegenüberliegenden Längsseiten des Wischarmteiles entsprechende Lagerbohrungen oder Lagervertiefungen vorgesehen, in welche die Drehzapfen eingreifen. Bei Bedarf können auch die Lagerbohrungen oder Lagervertiefungen an den gegenüberliegenden Seitenwänden der Verkleidung vorgesehen sein. Die Drehzapfen sind dann an dem Wischarmteil angebracht und stehen von dessen gegenüberliegenden Außenseiten nach auswärts ab. Bei entsprechender Bemaßung unter Berücksichtigung der Elastizitätseigenschaften der Verkleidung kann diese Gelenkverbindung montagefreundlich als Schnappverbindung ausgebildet sein.

Eine Ausgestaltung der Erfindung gemäß Anspruch 3 sieht vor, daß mittels einer lösbaren Verriegelungsvorrichtung die Verkleidung in ihrer geschlossenen Stellung und eventuell auch in einer geöffneten Stellung an dem Wischarmteil arretierbar ist. Die Arretierung der Verkleidung in ihrer geschlossenen Stellung gewährleistet einen sicheren Betrieb der Scheibenreinigungsanlage, und eine Arretierung der Verkleidung in ihrer geöffneten Stellung ermöglicht eine ungestörte Handhabung beim Wischblattwechsel. Die Verriegelungsvorrichtung kann dabei in einfacher Weise von einem oder mehreren Rastnoppen und einer oder mehreren Rastvertiefungen gebildet sein, die in der Nähe des zwischen dem Wischarmteil und der Verkleidung gebildeten Schwenkachse wechselseitig an der Verkleidung und an dem Wischarmteil vorgesehen sind und unter Ausnutzung der Elastizität der Verkleidung miteinander zusammenwirken. In einfachster Weise kann in entsprechendem Abstand von der Drehachse an der Innenseite der Seitenwand der Verkleidung ein Rastnoppen ausgebildet sein, der in geschlossener Stellung die Unterkante und in geöffneter Stellung die Oberkante des Wischarmteiles hinterrastet.

Eine vorteilhafte Ausgestaltung der Erfindung gemäß Anspruch 4 sieht vor, daß ein an der Verkleidung eingebrachter bzw. einstückig mit der Verkleidung ausgebildetes, federnd auslenkbares Rastelement als Verriegelungsorgan mit dem Wischarmteil zusammenwirkt, vorzugsweise mit dem freien Ende des Wischarmteiles. Dieses Verriegelungsorgan kann dabei so ausgebildet sein, daß die Arretierung der Verkleidung in bezug auf das Wischarmteil durch Verschwenken der Verkleidung aus der geschlossenen Stellung in die geöffnete Stellung bzw. umgekehrt selbsttätig lösbar bzw. verriegelbar ist. Dieses wäre von besonderem Vorteil im Hinblick auf eine einfache Handhabung. Wenn demgegenüber ein ungewolltes Lösen der Arretierung, insbesondere durch die Krafteinwirkung der Luftanströmung bei hohen Fahrgeschwindigkeiten, mit Sicherheit ausgeschlossen werden soll, muß das Verriegelungsorgan mit einem entsprechend starken Hinterschnitt oder für entsprechend große, zum Lösen des Verriegelungsorganes erforderliche Auslenkkräfte ausgebildet sein. In diesem Fall erfordert der Vorteil der höheren Betriebssicherheit eine manuelle Betätigung des Verriegelungsorganes als zusätzliche Handhabung, die jedoch im Hinblick auf den erzielbaren Vorteil als angemessen hingenommen werden kann.

Bevorzugt wird eine Ausgestaltung gemäß Anspruch 5, welche vorsieht, daß die Verkleidung als Spoiler ausgebildet ist, vorzugsweise als Integralspoiler. Mit einem solchen Spoiler bzw. Integralspoiler können Formgebungen realisiert werden, die das Hochgeschwindigkeitsverhalten des mit einem Wischblatt bestückten Wischarmes im Hinblick auf die Aerodynamik und die Aeroakustik entscheidend beeinflussen können. Auf Spoiler am Wischblatt kann verzichtet werden, so daß im Zusammenhang mit dem erfindungsgemäßen Wischarm kostengünstigere Wischblätter ohne Spoiler verwendbar sind. Die, insbesondere als Integralspoiler ausgebildete, Verkleidung kann zusätzlich als Designelement verstanden werden, welches es ermöglicht, den an sich konventionellen Wischarm harmonisch an verschiedene Fahrzeugkonzepte anzupassen. Störende Kanten werden dabei durch den Integralspoiler abgedeckt.

In diesem Zusammenhang wird eine vorteilhafte Ausgestaltung der Erfindung gemäß Anspruch 6 empfohlen, wonach der Integralspoiler über den größten Teil der Länge des Wischarmteiles und über die gesamte Länge des Wischblattes die Oberseite des Wischarmteiles und des Wischblattes vollständig überdeckt und sich ausgehend von seiner Oberseite an der dem anströmenden Fahrtwind ausgesetzten Längsseite auf die Scheibe des Fahrzeuges zu erstreckt. Diese Ausbildung sorgt dafür, daß hintereinanderliegende Kanten am Wischarm und am Wischblatt, die bei anströmendem Fahrtwind Geräusche verursachen, abgedeckt sind. Dabei kann die durch Anströmung offene Kanten des Wischarmes und des Wischblattes verursachte Geräuschbildung noch weiter verringert werden, wenn gemäß einer vorteilhaften Ausgestaltung gemäß Anspruch 7 in Betriebsstellung des mit einem Wischblatt verbunden Wischarmes an der dem anströmenden Fahrtwind ausgesetzten Längsseite die Unterkante der Verkleidung bzw. des Integralspoilers bis nahe an die Scheibe des Fahrzeuges heranreicht, jedoch ohne diese zu berühren. Bei dieser Ausgestaltung werden im wesentlichen alle von dem Fahrtwind frei anströmbaren Kanten des Wischarmes und des Wischblattes komplett überdeckt.

Um im Falle eines ungewollten Aufschlagens des Wischblattes auf die Scheibe oder bei einem ungewollten Kontakt der Unterkante der Verkleidung bzw. des Integralspoilers mit der Scheibe eine Beschädigung der Scheibe bzw. deren Oberfläche auszuschließen, wird eine vorteilhafte Ausgestaltung gemäß Anspruch 8 empfohlen. Diese sieht vor, daß die Unterkante der Verkleidung bzw. des Integralspoilers aus einem weicheren, insbesondere gummiartigen, Material besteht oder von einer an der Verkleidung bzw. am Integralspoiler angebrachten Lippe aus einem solchen weicheren, insbesondere gummiartigen Material gebildet ist.

Um ein sparsames aber zielgerichtetes Auftragen von Waschflüssigkeit auf die zu reinigende Scheibe zu erreichen, ist bereits bekannt, am Wischblatt oder am Wischarm ein Sprührohr mit seitlichen Ausspritzöffnungen vorzusehen, welche über die Länge des Wischblattes verteilt angebracht sind. Über eine mit dem Sprührohr verbindbare Schlauchleitung wird die Waschflüssigkeit zu dem Sprührohr gefördert. Wenn das Sprührohr am Wischblatt vorgesehen ist, muß bei jedem Wischblattwechsel der Schlauchanschluß gelöst und wieder hergestellt werden. Wenn das Sprührohr am Wischarm vorgesehen ist, überragt es in Längsrichtung das freie Ende des Wischarmes, was störend im Hinblick auf die Aerodynamik und die Aeroakustik als auch auf die Stilistik wirkt. Deshalb ist eine bevorzugte Ausgestaltung der Erfindung gemäß Anspruch 9 von besonderem Vorteil, welche vorsieht, daß eine Düsenvorrichtung zum Aufbringen der Waschflüssigkeit auf die zu reinigende Scheibe an der Verkleidung bzw. an dem Integralspoiler gehalten oder ausgebildet ist. Bei einem Wischblattwechsel wird lediglich die Düsenvorrichtung gemeinsam mit der Verkleidung bzw. dem Integralspoiler in eine geöffnete Stellung und danach wieder in die geschlossene Stellung geschwenkt. Zusätzliche Handhabungen sind nicht erforderlich.

Von Vorteil ist dabei eine Ausgestaltung der Erfindung gemäß Anspruch 10, wonach die Düsenvorrichtung im Hinblick auf den anströmenden Fahrtwind verdeckt unter bzw. hinter der Verkleidung bzw. dem Integralspoiler angeordnet ist, vorzugsweise an dem vom anströmenden Fahrtwind abgewandten, hinteren Bereich der Verkleidung bzw. des Integralspoilers. Die Düsenvorrichtung kann somit keinen störenden Einfluß auf das aerodynamische oder aeroakustische Verhalten des Wischarmes ausüben. Auch im Hinblick auf die stilistischen Gestaltungsmöglichkeiten ist so ein störender Einfluß der Düsenvorrichtung ausgeschlossen. Außerdem ist eine einwandfreie und zielgerichtet in Bewegungsrichtung vor das aus seiner Parkstellung gestartete Wischblatt auf die Scheibe erfolgende Flüssigkeitsabgabe aus der Düsenvorrichtung gewährleistet.

Von Vorteil für ein effektives Aufspritzen der Waschflüssigkeit auf die Scheibe ist dabei eine Ausgestaltung gemäß Anspruch 11, welche vorsieht, daß die Düsenvorrichtung einen mit einer Zuleitung verbindbaren Flüssigkeitskanal umfaßt, der sich längs der Verkleidung bzw. des Integralspoilers bis zu dem vom Befestigungsteil abgewandten Ende des Wischblattes oder zumindest bis in die Nähe dieses Endes erstreckt, und der dabei mit mehreren über die Länge des Wischblattes verteilt angeordneten Ausspritzdüsen verbunden ist. Wenn außerdem gemäß Anspruch 12 die Düsenvorrichtung ein separater, langgestreckter, formstabiler oder flexibler, mit seitlichen Ausspritzdüsen ausgestatteter Hohlprofilkörper ist, der, vorzugsweise rastend, in einer Aufnahme der Verkleidung bzw. des Integralspoilers gehalten ist, ergibt sich die Möglichkeit, eine eventuell verstopfte Düsenvorrichtung gegen eine neue auszutauschen. Im Falle einer einstückigen Ausbildung der Düsenvorrichtung mit der Verkleidung bzw. dem Integralspoiler müßte in einem solchen Fall die komplette Verkleidung bzw. der komplette Integralspoiler ausgetauscht werden. Eine flexible Ausbildung des die Düsenvorrichtung bildenden Hohlprofilkörpers hätte außerdem den Vorteil, daß gleichartige Düsenvorrichtungen für verschieden geformte Integralspoiler oder Verkleidungen verwendet werden könnten, da die Düsenvorrichtung flexibel entlang der Spoilerkontur angepaßt werden kann.

Der besondere Vorteil einer Ausgestaltung gemäß Anspruch 13, wonach die Verkleidung bzw. der Integralspoiler aus Kunststoffmaterial gefertigt ist, insbesondere durch Spritzgießen, ist vor allem in den vielfältigen Gestaltungsmöglichkeiten zu sehen, die mit einem vertretbaren Kostenaufwand realisierbar sind.

Anhand einer Zeichnung wird nachfolgend ein Ausführungsbeispiel der Erfindung näher beschrieben. In der Zeichnung zeigen:
- Fig. 1: einen mit einem Wischblatt bestückten Wischarm mit einer Verkleidung, die in eine geöffnete Stellung geschwenkt ist,
- Fig. 2: in Phantombilddarstellung einen Wischarm ohne Wischblatt mit in der geschlossenen Stellung arretierter Verkleidung und
- Fig. 3: einen senkrechten Schnitt durch einen in Betriebsstellung befindlichen Wischarm mit angelenktem Wischblatt im Bereich der zwischen dem Wischarm und dem Wischblatt gebildeten Gelenkachse.

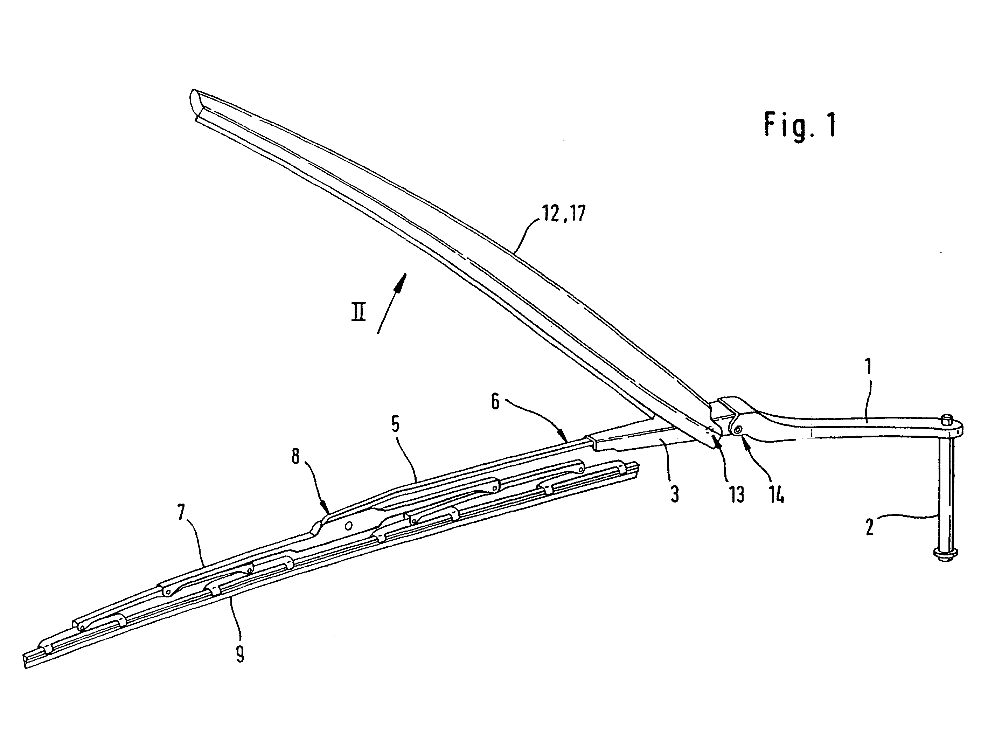

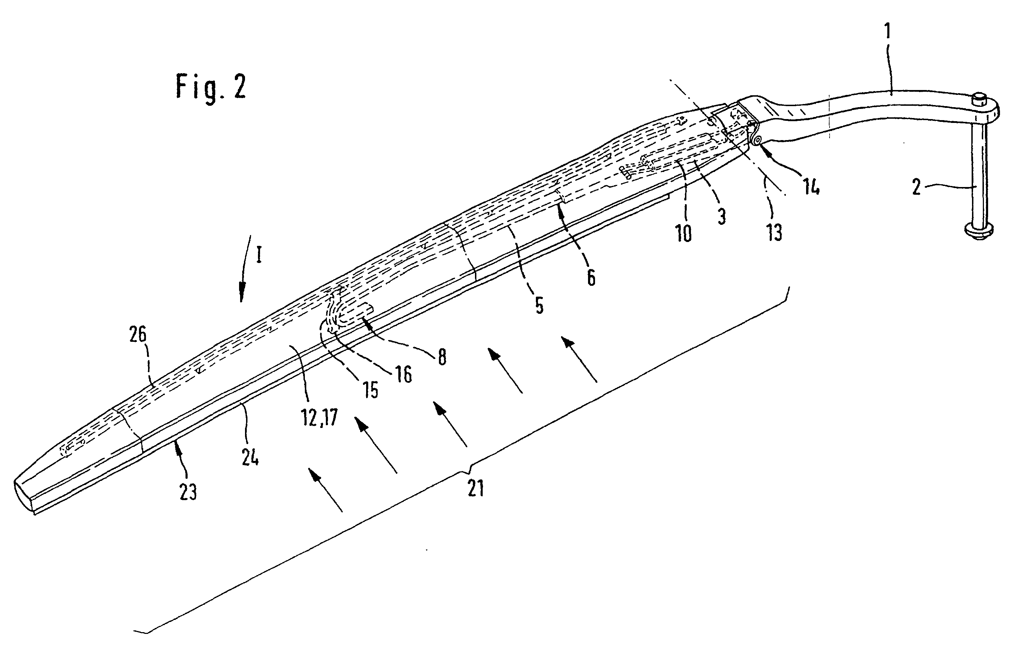

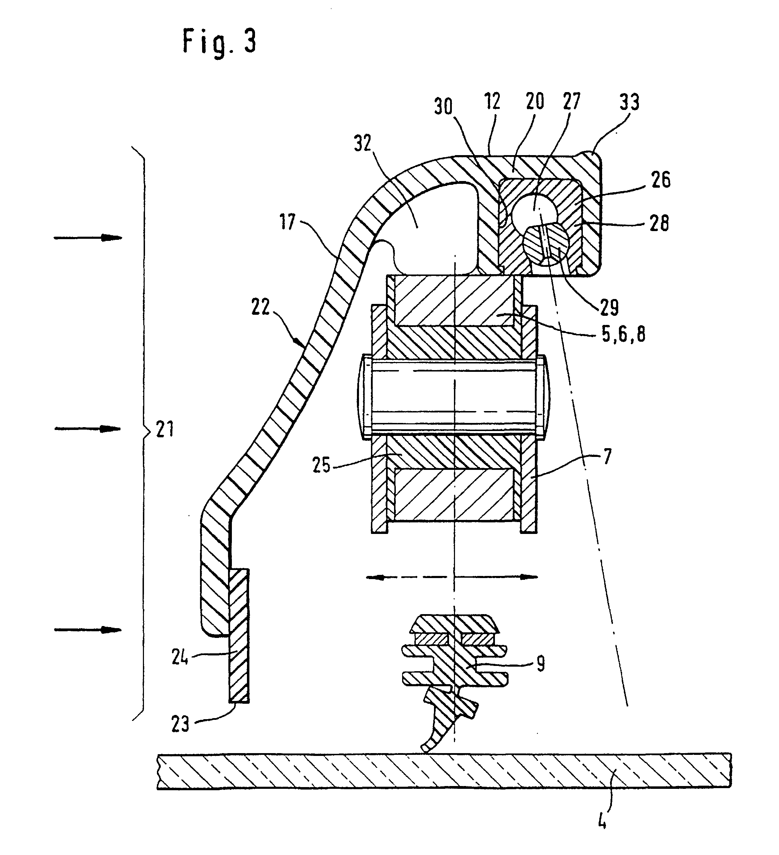

In den Fig. 1 und 2 ist ein Wischarm herkömmlicher Bauart zu erkennen. Dieser Wischarm besitzt ein als Blechteil oder als Druckgußteil gefertigtes Befestigungsteil 1, daß im Bereich seines einen Endes drehfest auf einer pendelnd antreibbaren Wischerwelle 2 zu befestigen ist. Die Wischerwelle 2 ist in den Fig. 1 und 2 im wesentlichen nur zur Verdeutlichung ihrer Lage schematisch eingezeichnet. An dem anderen Ende des Befestigungsteiles 1 ist ein als Blechteil gefertigtes Gelenkteil 3 so angelenkt, daß es in Richtung auf die zu reinigende Scheibe 4 des Fahrzeuges (Fig. 3) und von dieser hinweg geschwenkt werden kann. An dem Gelenkteil 3 ist eine aus Bandstahl gefertigte Wischstange 5 befestigt, so daß das Gelenkteil 3 und die Wischstange 5 insgesamt ein an dem Befestigungsteil 1 angelenktes Wischarmteil 6 bilden. Das Wischarmteil 6 könnte auch einstückig aus Blech hergestellt sein. Sein freies Ende ist als ein zum Verbinden mit einem Wischblatt 7 geeigneten Haken geformt. Das Wischblatt 7 von herkömmlicher Bauart umfaßt ein aus mehreren gelenkig miteinander verbundenen Bügeln bestehendes Wischblattgestell, in dessen Krallen der Oberteil einer Wischleiste 9 gehalten ist. In Fig. 2 sind noch zwei Federelemente 10 zu erkennen, die mit dem Wischarmteil 6 einerseits und dem Befestigungsteil 1 andererseits verbunden und dazu bestimmt sind, das Wischarmteil 6 in Betriebsstellung in Richtung auf die Scheibe 4 zu beaufschlagen oder das Wischarmteil 6 nach seinem Abklappen von der Scheibe 4 in einer stabilen Abklappstellung zu halten.

Erfindungswesentlich ist eine aus Kunststoffmaterial gefertigte, langgestreckte Verkleidung 12, die an dem Wischarm gehalten ist. Dabei ist die Verkleidung 12 im Bereich ihres einen Endes um eine quer zu dem Wischarmteil 6 verlaufende Schwenkachse 13 schwenkbar an dem zu dem Wischarmteil 6 gehörenden Gelenkteil 3 gehalten. Die Schwenkachse 13 befindet sich in relativ kurzem Abstand von dem zwischen dem Befestigungsteil 1 und dem Gelenkteil 3 gebildeten Gelenk 14. Dies ermöglicht, daß sich die Verkleidung 12 nahezu über die gesamte Länge des Wischarmteiles 6 erstreckt. Das im Bereich der Schwenkachse 13 vorgesehene Schwenkgelenk wird von zwei an der Verkleidung 12 ausgebildeten Lagerzapfen gebildet, die in zugehörige Bohrungen bzw. Vertiefungen im Gelenkteil 3 eingreifen. Während in Fig. 1 die Verkleidung 12 in einer geöffneten Stellung II gezeigt ist, nimmt die Verkleidung 12 in Fig. 2 eine geschlossene Stellung I ein, in der sie außerdem durch ein manuell betätigbares Rastelement 15 an dem Wischarmteil 6 gesichert ist. Das Rastelement 15 ist ein einstückig an die Verkleidung 12 angeformter Rastarm, der innerhalb der Verkleidung 12 von deren Oberseite nach unten absteht. Das Rastelement 15 ist mit einer konkaven Kontur ausgebildet, die das freie Ende der Wischstange 5 rastend aufnehmen kann. Im vorliegenden Fall befindet sich das Rastelement 15 in rastendem Eingriff mit der bogenförmigen Außenfläche des am freien Ende der Wischstange 5 geformten Hakens 8. Für die manuelle Betätigung des Rastelementes 15 ist an diesem ein Angriffsnocken 16 ausgebildet. Durch elastische Auslenkung des Rastelementes 15 in Richtung zu dem freien Ende der Verkleidung 12 hin wird die Rastverbindung zwischen dem Wischarmteil 6 und der Verkleidung 12 gelöst, und die Verkleidung 12 kann in die geöffnete Stellung II verschwenkt werden.

An dieser Stelle wird darauf hingewiesen, daß bei Bedarf das Wischarmteil 6 und gemeinsam mit diesem die Verkleidung 12 in eine von der Scheibe 4 des Fahrzeuges abgeklappte Stellung verschwenkt werden kann, wobei die Verkleidung 12 in der geschlossenen Stellung I in bezug auf das Wischarmteil 6 verbleiben kann. Ebenso ist es möglich, die Verkleidung 12 unabhängig von der Stellung des Wischarmteiles 6 in seine geöffnete Stellung II zu bringen.

Ein weiteres wesentliches Merkmal der Erfindung ist, daß die Verkleidung 12 als Spoiler ausgebildet ist, vorzugsweise als Integralspoiler 17. Dieses Merkmal ist am besten in der in Fig. 3 gezeigten Querschnittsdarstellung zu erkennen. Die Verkleidung 12 bzw. der Integralspoiler 17 ist so geformt, daß sich sein Oberteil 20, bezogen auf den anströmenden Fahrtwind 21, bis hinter das Wischblatt 7 bzw. den Wischarmteil 6 erstreckt. Ausgehend von dem Oberteil 20 erstreckt sich die Verkleidung 12 bzw. der Integralspoiler 17 entgegen dem anströmenden Fahrtwind 21 und gleichzeitig in Richtung auf die Scheibe 4 des Fahrzeuges. Die Außenfläche 22 des Integralspoilers 17 ist dabei als Windleitfläche ausgebildet und mit strömungsgünstigen harmonischen Übergängen ausgestattet. Die der Scheibe 4 zugewandte Unterkante 23 der Verkleidung 12 bzw. des Integralspoilers 17 reicht in Betriebsstellung des Wischarmes bis nahe an die Scheibe 4 heran, jedoch ohne diese zu berühren. Um Beschädigungen der Scheibe 4 zu vermeiden, besteht diese Unterkante 23 gegenüber dem für die übrige Verkleidung bzw. den übrigen Integralspoiler verwendeten Kunststoffmaterial aus einem weicheren, insbesondere gummiartigen, Material. Dabei kann die Unterkante 23 Bestandteil einer Lippe 24 sein, die separat gefertigt und anschließend an der Verkleidung 12 bzw. dem Integralspoiler 17 befestigt worden ist oder die direkt an die Verkleidung 12 bzw. den Integralspoiler 17 angespritzt worden ist. In Fig. 3 ist zu erkennen, daß in bezug auf die senkrechte Richtung die Unterkante 23 nahe an die Scheibe 4 herabreicht, so daß in bezug auf den parallel zu der Scheibe 4 anströmenden Fahrtwind 21 ein großer Teil der Höhe der Wischleiste 9 überdeckt ist.

Eine derartige Verkleidung 12 bzw. ein derartiger Integralspoiler 17, der sich, wie aus den Fig. 1 und 2 ersichtlich, über den größten Teil der Länge des Wischarmteiles 6 und über die gesamte Länge des Wischblattes 7 erstreckt und dabei die Oberseite des Wischarmteiles 6 und des Wischblattes 7 vollständig überdeckt und sich ausgehend von seiner Oberseite an der dem anströmenden Fahrtwind 21 ausgesetzten Längsseite auf die Scheibe 4 zu erstreckt, ist bestens geeignet, die Aerodynamik des Wischarmes zu verbessern und die Entstehung von Windgeräuschen deutlich zu verringern. Die an der hinteren Kante des Oberteiles 20 der Verkleidung 12 bzw. des Integralspoilers 17 ausgebildete, sich über die gesamte Länge erstreckende, wulstartige, gerundete Erhebung 33 wirkt der Bildung starker Abrißwirbel der Luftströmung entgegen, wodurch die Aerodynamik weiter verbessert und die Entstehung von Windgeräuschen weiter verringert wird.

In Fig. 3 ist noch zu erkennen, daß das Wischblatt 7 in an sich bekannter Weise über ein Verbindungsstück 25 schwenkbar mit dem Haken 8 der Wischstange 5 verbunden ist.

Als wesentliches Merkmal ist weiterhin zu beachten, daß der Wischarm mit einer Düsenvorrichtung 26 zum Aufbringen von Waschflüssigkeit auf die Scheibe 4 des Fahrzeuges ausgestattet ist. Diese Düsenvorrichtung 26 ist, wie in den Fig. 2 und 3 dargestellt, an der Verkleidung 12 bzw. an dem Integralspoiler 17 gehalten. Dieses hat den besonderen Vorteil, daß bei einem erforderlichen Wischblattwechsel die Waschflüssigkeitszufuhr mit der Düsenvorrichtung 26 verbunden bleiben kann, weil die Düsenvorrichtung 26 gemeinsam mit der Verkleidung 12 bzw. dem Integralspoiler 17 in die geöffnete Stellung II gebracht werden kann. Gegenüber einer Ausführungsform, bei welcher eine Düsenvorrichtung am Wischblatt angebracht ist, gestaltet sich der erforderliche Wischblattwechsel außerdem kostengünstiger, da herkömmliche Wischblätter ohne Düsenvorrichtung billiger sind und wegen der Anbringung der Düsenvorrichtung an der Verkleidung 12 bzw. dem Integralspoiler 17 diese Düsenvorrichtung 26 weiterhin verwendet werden kann. Da die Düsenvorrichtung 26 im Hinblick auf den anströmenden Fahrtwind 21 verdeckt unter bzw. hinter der Verkleidung 12 bzw. dem Integralspoiler 17 angeordnet ist, vorzugsweise an dem vom anströmenden Fahrtwind 21 abgewandten, hinteren Bereich der Verkleidung 12 bzw. des Integralspoilers 17, kann diese Düsenvorrichtung 26 keinen negativen Einfluß auf die Aerodynamik oder die Entstehung von Windgeräuschen ausüben.

Die Düsenvorrichtung 26 umfaßt dabei einen Flüssigkeitskanal 27, der entweder direkt in die Verkleidung 12 bzw. den Integralspoiler 17 eingeformt ist oder der in einem separaten, langgestreckten Hohlprofilkörper 28 ausgebildet ist und der mit seitlichen Ausspritzdüsen 29 ausgestattet ist. Die Ausspritzdüsen 29, die über die Länge des Hohlprofilkörpers 28 verteilt angeordnet sind, können in bevorzugter Weise als räumlich verschwenkbare Düsenkugeln ausgebildet sein.

Aus Fig. 3 ist noch ersichtlich, daß die Düsenvorrichtung 26 bzw. der zur Düsenvorrichtung 26 gehörende Hohlprofilkörper 28 rastend in einer kanalförmig unter dem Oberteil 20 ausgebildeten Aufnahme 30 gehalten ist. Die kanalförmige Ausbildung der Aufnahme 30 ist dann von Vorteil, wenn der Hohlprofilkörper 28 aus flexiblem Material gebildet ist, so daß er an eine mit Biegungen behafteten Kontur der Verkleidung 12 bzw. des Integralspoilers 17 angepaßt werden kann. Im Falle der Fertigung des Hohlprofilkörpers aus formstabilem Material genügt es, über die Länge der Verkleidung 12 bzw. des Integralspoilers 17 verteilt mehrere sektorielle Aufnahmen 30 zur rastenden Halterung der Düsenvorrichtung 26 bzw. des Hohlprofilkörpers 28 vorzusehen.

Die Anordnung der Düsenvorrichtung 26 an einem vom anströmenden Fahrtwind 21 abgewandten Bereich der Verkleidung 12 bzw. des Integralspoilers 17 hat den Vorteil, daß beim Bewegen des Scheibenwischers aus der Parkposition heraus gemäß dem Fall 30 in Fig. 3 aus den Ausspritzdüsen 29 Waschflüssigkeit in Bewegungsrichtung vor der Wischleiste 9 auf die Scheibe 4 des Fahrzeuges gespritzt werden kann. Damit ist eine effiziente und sparsame Verwendung von Waschflüssigkeit gewährleistet. Außerdem kann bei dieser Anordnung der Düsenvorrichtung 26 der Fahrtwind den abgegebenen Sprühstrahl nicht mehr verwirbeln bzw. zersträuen, weshalb eine exaktere und von der Fahrgeschwindigkeit unbeeinflußte Einstellung des Sprühstrahles ermöglicht wird.

In der Schnittdarstellung von Fig. 3 ist im oberen Bereich der Verkleidung 12 bzw. des Integralspoilers noch eine Stützrippe 32 erkennbar, mit der sich die Verkleidung 12 bzw. der Integralspoiler 17 auf der Oberseite des Wischarmteiles 6 bzw. der Wischstange 5 abstützt. Vorteilhaft ist es, über die Länge des Wischarmteiles 6 mehrere solcher Stützrippen 32 vorzusehen. Dieses ermöglicht eine spielfreie und damit klapperfreie Befestigung bzw. Verbindung der Verkleidung 12 bzw. des Integralspoilers 17 mit dem Wischarmteil 6.

### Bezugszeichenliste

- 1: Befestigungsteil
- 2: Wischerwelle
- 3: Gelenkteil
- 4: Scheibe
- 5: Wischstange
- 6: Wischarmteil
- 7: Wischblatt
- 8: Haken
- 9: Wischleiste
- 10: Federelement
- 12: Verkleidung
- 13: Schwenkachse
- 14: Gelenk
- 15: Rastelement
- 16: Angriffsnocken
- 17: Integralspoiler
- 20: Oberteil
- 21: Fahrtwind
- 22: Außenfläche
- 23: Unterkante
- 24: Lippe
- 25: Verbindungsstück
- 26: Düsenvorrichtung
- 27: Flüssigkeitskanal
- 28: Hohlprofilkörper
- 29: Düsenkugel
- 30: Pfeil
- 31: Pfeil
- 32: Stützrippe
- I: geschlossene Stellung
- II: offene Stellung

## Patentansprüche

1. Wischarm für eine Anlage zum Reinigen einer Scheibe an einem Fahrzeug mit einem an einer Antriebswelle (2) zu befestigenden Befestigungsteil (1), an dem auf die Scheibe (4) zu und von dieser hinweg schwenkbar ein Wischarmteil (6) angelenkt ist, das zumindest beim Betrieb der Scheibenreinigungsanlage mit einer Kraft in Richtung auf die Scheibe (4) beaufschlagt ist und mit dessen freiem Ende ein Wischblatt (7) verbindbar ist, und mit einer separaten Verkleidung (12), die an dem Wischarm angebracht ist und die sich in Längsrichtung über den größten Teil der Länge des gesamten Wischarmteiles (6) und über die gesamte Länge des mit dem Wischarmteil (6) verbundenen Wischblattes erstreckt, **dadurch gekennzeichnet, daß** die Verkleidung (12) im Bereich ihres, dem Befestigungsteil (1) zugewandten Endes um eine quer zu dem Wischarmteil (6) verlaufende Schwenkachse (13) relativ zu dem Wischarmteil (6) verschwenkbar mit dem Wischarmteil (6) verbunden ist.

2. Wischarm nach Anspruch 1, **dadurch gekennzeichnet, daß** die Verkleidung (12) über zwei Drehzapfen, die jeweils in einer Lagerbohrung oder eine Lagervertiefung eingreifen, mit dem Wischarmteil (6) verbunden sind.

3. Wischarm nach einem der vorhergehenden Ansprüche, **dadurch gekennzeichnet, daß** mittels einer lösbaren Verriegelungsvorrichtung die Verkleidung (12) in ihrer geschlossenen Stellung (I) und evtl. auch in einer geöffneten Stellung (II) an dem Wischarmteil (6) arretierbar ist.

4. Wischarm nach Anspruch 3, **dadurch gekennzeichnet, daß** ein an der Verkleidung (12) angebrachter bzw. einstükkig mit der Verkleidung (12) ausgebildetes, federnd auslenkbares Rastelement (14) als Verriegelungsorgan mit dem Wischarmteil (6) zusammenwirkt, vorzugsweise mit dem freien Ende des Wischarmteiles (6).

5. Wischarm nach einem der vorhergehenden Ansprüche, **dadurch gekennzeichnet, daß** die Verkleidung (12) als Spoiler ausgebildet ist, vorzugsweise als Integralspoiler (17).

6. Wischarm nach Anspruch 5, **dadurch gekennzeichnet, daß** der Integralspoiler (17) über den größten Teil der Länge des Wischarmteiles (6) und über die gesamte Länge des Wischblattes (7) die Oberseite des Wischarmteiles (6) und des Wischblattes (7) vollständig überdeckt und sich, ausgehend von seinem Oberteil (20), an der dem anströmenden Fahrtwind (21) ausgesetzten Längsseite auf die Scheibe (4) zu erstreckt.

7. Wischarm nach einem der vorhergehenden Ansprüche, **dadurch gekennzeichnet, daß** in Betriebsstellung des mit einem Wischblatt (7) verbundenen Wischarmes an der dem anströmenden Fahrtwind (21) ausgesetzten Längsseite die Unterkante (23) der Verkleidung (12) bzw. des Integralspoilers (17) nahe an die Scheibe (4) heranreicht, jedoch ohne diese zu berühren.

8. Wischarm nach Anspruch 7, **dadurch gekennzeichnet, daß** die Unterkante (23) der Verkleidung (12) bzw. des Integralspoilers (17) aus einem weicheren, insbesondere gummiartigen, Material besteht oder von einer an der Verkleidung (12) bzw. am Integralspoiler (17) angebrachten Lippe (24) aus einem solchen weicheren, insbesondere gummiartigen, Material gebildet ist.

9. Wischarm nach einem der vorhergehenden Ansprüche, **dadurch-gekennzeichnet,** daß an der Verkleidung (12) bzw. an dem Integralspoiler (17) eine Düsenvorrichtung (26) zum Aufbringen von Waschflüssigkeit auf die zu reinigende Scheibe (4) gehalten oder ausgebildet ist.

10. Wischarm nach Anspruch 9, **dadurch gekennzeichnet, daß** die Düsenvorrichtung (26) im Hinblick auf den anströmenden Fahrtwind (21) verdeckt unter bzw. hinter der Verkleidung (12) bzw. dem Integralspoiler (17) angeordnet ist, vorzugsweise an dem vom anströmenden Fahrtwind (21) abgewandten, hinteren Bereich der Verkleidung (12) bzw. des Integralspoilers (17).

11. Wischarm nach einem der vorhergehenden Ansprüche 9 oder 10, **dadurch gekennzeichnet, daß** die Düsenvorrichtung (26) einen mit einer Zuleitung verbindbaren Flüssigkeitskanal (27) umfaßt, der sich längs der Verkleidung (12) bzw. des Integralspoilers (17) bis zu dem vom Befestigungsteil (1) abgewandten Ende des Wischblattes (7) oder zumindest bis in die Nähe dieses Endes erstreckt, und der mit mehreren über die Länge des Wischblattes verteilt angeordneten Ausspritzdüsen verbunden ist.

12. Wischarm nach einem der vorhergehenden Ansprüche 9 bis 11, **dadurch gekennzeichnet, daß** die Düsenvorrichtung (26) ein separater, langgestreckter, formstabiler oder flexibler, mit seitlichen Ausspritzdüsen ausgestatteter Hohlprofilkörper (28) ist, der an der Verkleidung (12) bzw. an dem Integralspoiler (17) gehalten ist, vorzugsweise rastend in einer Aufnahme (30) der Verkleidung (12) bzw. des Integralspoilers (17) gehalten ist.

13. Wischarm nach einem der vorhergehenden Ansprüche, **dadurch gekennzeichnet, daß** die Verkleidung (12) bzw. der Integralspoiler (17) aus Kunststoffmaterial gefertigt ist, insbesondere durch Spritzgießen.

## Claims

1. A wiper arm for a device for cleaning a windshield on a vehicle having a retaining element (1) attachable to a drive shaft (2) and a wiper arm part (6) articulated to said retaining element be tilted toward and away from the windshield (4) and, at least during cleaning, is pushed against the windshield (4) by a force, a free end of the wiper arm part connected to a wiper (7) and with a separate trim (12) attachable to the wiper arm and extending longitudinally along most of a length of the wiper arm part (6) and over an entire length of the wiper connected to the wiper arm part (6), **characterized in that** the trim (12) in an area of an end facing the retaining element (1) has a pivoting connection to the wiper arm part (6) such that the trim can be pivoted relative to the wiper arm part (6) about a pivot axis perpendicular to the wiper arm part (6).

2. The wiper arm according to claim 1, **characterized in that** the trim (12) is connected to the wiper arm part (6) by way of two trunnions each engaged in a bearing bore or a bearing recess.

3. The wiper arm according to one of the preceding claims, **characterized in that** the trim (12) can be locked in its closed position (I) and possibly in an open position (II) on the wiper arm part (6) by way of a unlockable locking device.

4. The wiper arm according to claim 3 **characterized in that** a springy, tiltable snap-lock element (14) is carried on the trim (12) or is constructed in one part with the trim (12) and interacts as a locking element with the wiper arm part (6), preferably with the free end of the wiper arm part (6).

5. The wiper arm according to one of the preceding claims, **characterized in that** the trim (12) is configured as a spoiler, preferably as an integral spoiler (17).

6. The wiper arm according to claim 5, **characterized in that** the integral spoiler (17) completely covers an upper side of the wiper arm part (6) and of the wiper (7) over a greater part of a length of the wiper arm part (6) and over an entire length of the wiper (7), and extends beginning at its upper part (20) toward the windshield (4) along a longitudinal side exposed to a wind blast (21).

7. The wiper arm according to one of the preceding claims, **characterized in that**, in an operating position of the wiper arm that is connected to a wiper (7), a lower edge (23) of the trim (12) or of the integral spoiler (17), respectively, extends at a longitudinal side exposed to an oncoming wind blast (21) and close to, but not contacting, the windshield (4).

8. The wiper arm according to claim 7, **characterized in that** the lower edge (23) of the trim (12) or of the-integral spoiler (17), respectively, consists of a soft and, in particular a rubber-like material, or is formed as a lip (24) consisting of such a soft and, in particular a rubber-like material attached to the trim (12) or to the integral spoiler (17).

9. The wiper arm according to one of the preceding claims, **characterized in that** a jet device (26) is retained or mounted on the trim (12) or on the integral spoiler (17) for application of washer fluid to the windshield (4) to be cleaned.

10. The wiper arm according to claim 9, **characterized in that** the jet device (26) is covered with respect to the oncoming wind blast (21) under or behind the trim (12) or the integral spoiler (17), preferably in a rearward area of the trim (12) or the integral spoiler (17) facing away from the wind blast (21).

11. The wiper arm according to one of the preceding claims 9 or 10, **characterized in that** the jet device (26) comprises a fluid channel (27) connected to a feeding line, the fluid channel extending along the trim (12) or the integral spoiler (17) up to the end of the wiper (7) facing away from the retaining element (1) or at least close to the end of the wiper (7), and connected to a plurality of spraying jets distributed across a length of the wiper.

12. The wiper arm according to one of the preceding claims 9 or 11, **characterized in that** the jet device (26) is a separate, oblong, rigid or flexible hollow-profile body (28) with lateral spraying jets, that is held at the trim (12), or the integral spoiler (17), preferably snap-locked, retained by a retaining device (30) of the trim (12), or the integral spoiler (17).

13. The wiper arm according to one of the preceding claims, **characterized in that** the trim (12), or the integral spoiler (17), is made out of a plastic material, and, in particular, by use of injection molding.

## Revendications

1. Bras de monture d'essuie-glace pour une installation de nettoyage d'une vitre d'un véhicule, comportant un élément de fixation (1) qui doit être fixé sur un arbre moteur (2) et auquel est articulé, de manière à pouvoir pivoter en se rapprochant ou en s'écartant de la vitre (4), un élément de bras (6) qui au moins lorsque l'installation de nettoyage de vitre est en marche est soumis à une force dirigée vers la vitre (4) et à l'extrémité libre duquel peut être reliée une raclette d'essuie-glace (7) ; comportant un revêtement séparé (12) fixé sur le bras de monture d'essuie-glace et qui s'étend longitudinalement sur la plus grande partie de la longueur de l'élément de bras (6), ainsi que sur toute la longueur de la raclette reliée à l'élément de bras (6), **caractérisé en ce qu'au** voisinage de son extrémité orientée vers l'élément de fixation (1), le revêtement (12) est relié à l'élément de bras (6) de manière à pouvoir pivoter par rapport à l'élément de bras (6) autour d'un axe de pivotement (13) s'étendant transversalement à celui-ci.

2. Bras de monture d'essuie-glace selon la revendication 1, **caractérisé en ce que** le revêtement (12) est relié à l'élément de bras (6) par l'intermédiaire de deux pivots dont chacun est en prise dans une forure ou une cavité servant de logement.

3. Bras de monture d'essuie-glace selon l'une des revendications précédentes, **caractérisé en ce qu**'au moyen d'un dispositif de verrouillage amovible, le revêtement (12) peut être bloqué, dans sa position fermée (I) et éventuellement aussi dans une position ouverte (II), sur l'élément de bras (6).

4. Bras de monture d'essuie-glace selon la revendication 3, **caractérisé en ce qu'**un élément à cran d'arrêt (14), fixé sur le revêtement (12) ou formé d'une seule pièce avec celui-ci, articulable de manière élastique, agit conjointement, en tant qu'organe de verrouillage, avec l'élément de bras (6), et de préférence avec l'extrémité libre de celui-ci.

5. Bras de monture d'essuie-glace selon l'une des revendications précédentes, **caractérisé en ce que** le revêtement (12) a la forme d'un déporteur, et de préférence d'un déporteur intégral (17).

6. Bras de monture d'essuie-glace selon la revendication 5, **caractérisé en ce que** le déporteur intégral (17) recouvre complètement, par-dessus la plus grande partie de la longueur de l'élément de bras (6) et par-dessus toute la longueur de la raclette (7), la face supérieure de l'élément de bras (6) et de la raclette (7) ; et qu'il s'étend, en partant de sa partie supérieure (20), sur le côté longitudinal exposé au vent relatif affluant (21), en direction de la vitre (4).

7. Bras de monture d'essuie-glace selon l'une des revendications précédentes, **caractérisé en ce que,** dans la position de marche dudit bras relié à une raclette d'essuie-glace (7), sur le côté longitudinal exposé au vent relatif affluant (21), l'arête inférieure (23) du revêtement (12) ou encore du déporteur intégral (17) s'étend jusqu'au voisinage de la vitre (4), mais sans la toucher.

8. Bras de monture d'essuie-glace selon la revendication 7, **caractérisé en ce que** l'arête inférieure (23) du revêtement (12) ou encore du déporteur intégral (17) est constituée d'un matériau relativement mou et en particulier caoutchouteux, ou qu'elle est formée d'une lèvre (24) fixée sur le revêtement (12) ou encore sur le déporteur intégral (17) et faite d'un tel matériau relativement mou et en particulier caoutchouteux.

9. Bras de monture d'essuie-glace selon l'une des revendications précédentes, **caractérisé en ce que,** sur le revêtement (12) ou encore sur le déporteur intégral (17), est fixé ou formé un dispositif à tuyère (26) servant à appliquer un liquide de lavage sur la vitre (4) à nettoyer.

10. Bras de monture d'essuie-glace selon la revendication 9, **caractérisé en ce que** le dispositif à tuyère (26) est mis en place, de manière à être à l'abri du vent relatif affluant (21), en dessous ou à l'arrière du revêtement (12) ou encore du déporteur intégral (17), et de préférence au voisinage de la zone postérieure, opposée par rapport au vent relatif affluant (21), du revêtement (12) ou encore du déporteur intégral (17).

11. Bras de monture d'essuie-glace selon l'une des revendications 9 ou 10, **caractérisé en ce que** le dispositif à tuyère (26) comprend un conduit de liquide (27) pouvant être relié à une conduite d'amenée, conduit qui s'étend le long du revêtement (12) ou encore du déporteur intégral (17) jusqu'à l'extrémité, opposée par rapport à l'élément de fixation (1), de la raclette (7), ou du moins jusqu'au voisinage de cette extrémité, et qui est relié à plusieurs tuyères de pulvérisation réparties sur la longueur de la raclette.

12. Bras de monture d'essuie-glace selon l'une des revendications 9 à 11, **caractérisé en ce que** le dispositif à tuyère (26) est constitué d'un corps à profil creux (28) séparé, oblong, de forme stable ou flexible, muni de tuyères de pulvérisation latérales, qui est fixé sur le revêtement (12) ou encore sur le déporteur intégral (17), et qui de préférence est retenu de manière encliquetable dans un logement (30) du revêtement (12) ou encore du déporteur intégral (17).

13. Bras de monture d'essuie-glace selon l'une des revendications précédentes, **caractérisé en ce que** le revêtement (12) ou encore le déporteur intégral (17) est fabriqué à partir d'un matériau à base de matière plastique, en particulier par moulage par injection.
